# EUROPÄISCHE PATENTSCHRIFT

(11) **EP 2 838 940 B1**
(45) Veröffentlichungstag und Bekanntmachung des Hinweises auf die Patenterteilung: **15.03.2017**
(21) Anmeldenummer: 13735185.4
(22) Anmeldetag: 28.03.2013
(51) Int. Cl.: C08J 9/04, C08J 9/08, C08J 9/12, C08J 9/14, B29C 44/26, B29C 51/08

(54) **VERFAHREN ZUR HERSTELLUNG VON LEBENSMITTELVERPACKUNGEN**
METHOD FOR PRODUCING FOOD PACKAGINGS
PROCÉDÉ DE FABRICATION D'EMBALLAGES ALIMENTAIRES

(30) Priorität: 02.04.2012 DE 102012006593; 02.04.2012 DE 102012006594
(43) Veröffentlichungstag der Anmeldung: 25.02.2015
(73) Patentinhaber: Inde Plastik Betriebsgesellschaft mbH, 52457 Aldenhoven (DE); Fraunhofer Gesellschaft zur Förderung der angewandten Forschung e.V., 80686 München (DE)
(72) Erfinder: FERON, Frank, 52355 Düren (DE); VAN LUCK, Frank, 41564 Kaarst (DE); KESSELRING, Anneliese, 47877 Willich (DE); MICHELS, Carmen, 47877 Willich (DE); WODKE, Thomas, 59597 Erwitte (DE); ZEPNIK, Stefan, 40227 Düsseldorf (DE)
(86) Internationale Anmeldenummer: PCT/DE2013/000263
(87) Internationale Veröffentlichungsnummer: WO 2013/149612

(56) Entgegenhaltungen:
- WO-A1-99/65977

## Beschreibung

Die vorliegende Erfindung betrifft ein Verfahren zur Herstellung von Lebensmittelverpackungen aus biologisch abbaubarem Schaummaterial, insbesondere von Trays für den Gebrauch als Einweggeschirr.

Ein derartiges Verfahren ist aus der EP 0 940 243 B1 bekannt.

In der Vergangenheit sind bereits viele Arten verschiedener Schaummaterialien aus Kunststoffen erzeugt worden. Beispielsweise wurden solche Schaummaterialien aus Polystyrol hergestellt. Es ist jedoch auch bereits vorgeschlagen worden, solche Kunststoffe durch biologisch abbaubare Materialien zu ersetzen. Hiermit werden die entsprechenden Umweltverschmutzungsprobleme der biologisch nicht abbaubaren oder nur sehr langsam abbaubaren Materialien beseitigt bzw. zumindest verringert. Ein solches biologisch abbaubares Material ist Celluloseacetat. Die biologische Abbaubarkeit von Celluloseacetat ist in zahlreichen Veröffentlichungen verifiziert.

Bei dem in der vorstehend genannten Veröffentlichung beschriebenen Verfahren findet ein Ausgangsmaterial Verwendung, das Celluloseacetat, einen Weichmacher und ein Schaumnukleierungsmittel enthält. Als Treibmittel bzw. Aufschäummittel findet Wasser Verwendung. Nach dem Schmelzen der resultierenden Mischung bei einer Temperatur von 150-250 °C wird diese bei einer Temperatur von 120-220 °C abgegeben und dann aus einem Flachmaterialherstellungswerkzeug extrudiert. Nach dem Schmelzen und Extrudieren der resultierenden Mischung kann der resultierende Schaum einer Wärmebehandlung unter einer Last von 5-40 kgf/cm² unterworfen werden.

Mit dem bekannten Verfahren können Celluloseacetatschäume bereitgestellt werden, welche gut biologisch abbaubar sind und gute antibakterielle Eigenschaften sowie gute Verbrennbarkeit zeigen. Die Schäume können auch in Gestalt von Formteilen Verwendung finden.

Die WO 99/65977 A1 offenbart einen Prozess zur Herstellung u.a. von Lebensmittelverpackungen, wie Verpackungsschalen für Obst, Gemüse und Frischfleisch, aus biologisch abbaubarem Schaummaterial, bei dem ein biologisch abbaubares thermoplastisches Polymer bereitgestellt wird, welches zu einer Schmelze aufgeschmolzen wird, mit einem wasserfreien Treibmittel, wie Kohlendioxid oder Stickstoff, versetzt wird, abgekühlt wird und unter Aufschäumen zu einem Flachmaterial extrudiert wird, welches danach durch Tiefziehen zu dem gewünschten Erzeugnis weiterverarbeitet werden kann. In sämtlichen Beispielen wird als biologisch abbaubares thermoplastisches Polymer ein Blend aus Celluloseacetat als Hauptbestandteil und einem Polyester, wie Ecoflex^{®} oder Polycaprolacton (PCL), als Nebenbestandteil eingesetzt, der zusätzlich noch Kartoffelstärke, Triacetin und Glycerin sowie optional Talkum enthält.

Der vorliegenden Erfindung liegt die Aufgabe zugrunde, ein Verfahren der eingangs beschriebenen Art zu schaffen, mit dem sich Lebensmittelverpackungen, insbesondere Trays für den Gebrauch als Einweggeschirr, auf besonders wirtschaftliche und materialsparende Weise herstellen lassen.

Diese Aufgabe wird erfindungsgemäß bei einem Verfahren der angegebenen Art durch die folgenden Schritte gelöst:
Bereitstellen eines aus organischem Celluloseester oder Cellulosemischester, insbesondere Celluloseacetatmaterial, bestehenden oder diesen enthaltenden Ausgangsmateriales;
Vorbehandeln des Ausgangsmateriales durch Trocknung zur Feuchtereduzierung bis auf einen maximalen Feuchtegehalt von 1.000 ppm, gemessen bei ≥ 100 °C mit einer Absorptionswaage;
Halten des Feuchtegehaltes auf/unter dieser Grenze bis zum Beginn des nachfolgenden Aufschmelzprozesses;
Aufschmelzen des vorbehandelten Ausgangsmateriales, Einführen eines Treibmittels in die Schmelze, Kühlen der resultierenden Masse und Extrudieren derselben zum Aufschäumen zum Erhalt eines Schaummateriales als Flachmaterial;
wobei ein wasserfreies Treibmittel verwendet wird, das erhaltene Schaummaterial über einen zum zumindest teilweisen Eindiffundieren eines zweiten Treibmittels in das Schaummaterial ausreichenden Zeitraum gelagert wird, das gelagerte Schaummaterial auf eine Temperatur unterhalb der Aufschmelztemperatur desselben zum erneuten Expandieren durch Nachschäumen erwärmt wird und das erwärmte Schaummaterial zum Formen der Lebensmittelverpackung tiefgezogen wird.

Ein wesentliches Merkmal des erfindungsgemäßen Verfahrens betrifft die Vorbehandlung des Ausgangsmateriales zur Feuchtereduzierung desselben. Es wurde festgestellt, dass eine derartige Vorbehandlung auf Feuchtereduzierung unbedingt erforderlich ist, um einen hydrolytischen Abbau des Celluloseesters oder Cellulosemischesters während der Schmelzeverarbeitung zu verhindern. Dabei erfolgt erfindungsgemäß eine Feuchtereduzierung bis auf einen maximalen Feuchtegehalt von 1.000 ppm (0,1 Gew%), gemessen bei ≥ 100 °C mit einer Absorptionswaage, was im Gegensatz zum Stand der Technik steht, gemäß dem generell von den Herstellern von derartigen weichgemachten Estern, insbesondere von Celluloseacetat, ein Feuchtigkeitsgehalt von ca. 0,2 % für die Schmelzeverarbeitung angegeben wird.

Erfindungsgemäß wurde jedoch festgestellt, dass bei Einhaltung dieses Wertes eine Schaumextrusion des weichgemachten Esters, insbesondere von Celluloseacetat, in der Regel unmöglich gemacht wird. Es ist vielmehr zwingend erforderlich, einen maximalen Feuchtegehalt von 1.000 ppm einzuhalten.

Es wurde durch Untersuchungen festgestellt, dass der Feuchtigkeitsgehalt des Celluloseesters bzw. Cellulosemischesters, insbesondere Celluloseacetats, für die Schaumextrusion besonders kritisch ist. Zum einen kommen bei der Durchführung des erfindungsgemäßen Verfahrens Anlagen zum Einsatz, die eine vergleichsweise hohe Verweilzeitverteilung bewirken und dadurch eine längere thermomechanische Belastung des Materials hervorrufen. Zum anderen können zusätzliche Abbauprozesse durch zu hohe Feuchtigkeit im Granulat oder auch beispielsweise durch das eingesetzte Treibmittel auftreten. Ein solcher Materialabbau führt zu einer drastischen Verschlechterung der Schmelzeeigenschaften (Rheologie) und macht in der Regel die Schaumextrusion unmöglich. Für eine stabile Prozessführung und Herstellung eines qualitativ hochwertigen Celluloseester-Schaummateriales muss ein solcher Abbau zwingend vermieden werden.

Dem Trocknungsprozess kommt daher eine zentrale und entscheidende Rolle zu.

Ein kritischer Faktor des Celluloseesters bzw. Cellulosemischesters, insbesondere Celluloseacetats, ist dessen starke hygroskopische Eigenschaft. Insbesondere weichgemachtes Celluloseacetat nimmt sehr schnell Feuchtigkeit aus der Umgebung auf, d. h. getrocknetes Granulat kann sehr schnell nach der Trocknung bis zur Verarbeitung wieder Feuchtigkeit aufnehmen. Je wärmer das Granulat ist und/oder je höher die Umgebungstemperatur bei dieser Zwischenlagerung ist, desto schneller und höher ist die Feuchtigkeitsaufnahme. Die Trocknung muss daher so durchgeführt werden, dass der erzielte reduzierte Feuchtegehalt aufrechterhalten werden kann.

Um die obigen Voraussetzungen zu erfüllen, wird vorzugsweise als Trocknung eine Kaskadentrocknung durchgeführt. Hiermit ist eine effektive Trocknung des Materials ohne Weichmachermigration möglich. Dabei werden verschiedene Trocknungssysteme in Reihe geschaltet, so dass das Granulat kontinuierlich bis zur Verarbeitung aktiv getrocknet wird.

Insbesondere werden zur Trocknung erfindungsgemäß kontinuierlich arbeitende Infrarot-Trockner, insbesondere Infrarot-Drehrohrtrockner, eingesetzt. Speziell wird dabei zur Trocknung ein kontinuierlich arbeitender Infrarot-Trockner mit nachfolgendem Warmlufttrockner verwendet. Infrarot-Trockner haben eine sehr effektive und starke Trocknungsleistung, da sie durch IR-Strahlung das weichgemachte Celluloseacetat von innen heraus trocknen. Hierbei hat sich gezeigt, dass kontinuierlich arbeitende IR-Drehrohrtrockner am besten geeignet sind. Durch die Förderbewegung des Trockners ist der weichgemachte Celluloseester während der IR-Bestrahlung (Trocknung) permanent in Bewegung und wird nach einer definierten Verweilzeit im Trockner in den nachfolgenden Warmlufttrockner zur weiteren Konditionierung gefördert. Im Warmlufttrockner wird letztlich der erzielte Trocknungsgrad bis zur Dosierung in den Extrusionsprozess gehalten, ohne dass zu hohe Trocknertemperaturen oder zu lange Trocknungszeiten erforderlich sind. Dadurch wird eine effektive Trocknung bei gleichzeitiger Vermeidung der Weichmachermigration, welche beispielsweise bei zu hoher Trocknungstemperatur oder zu langen Trocknungszeiten stattfindet, erzielt.

Erfindungsgemäß wird der erzielte Feuchtegehalt auf/unter der angegebenen Grenze bis zum Beginn des nachfolgenden Aufschmelzprozesses gehalten. Dabei werden das Ausgangsmaterial nach der Vorbehandlung zur Feuchtereduzierung und/oder die entsprechenden Einrichtungen aktiv von Feuchtigkeit freigehalten. Dies wird insbesondere durch Stickstoffspülung, Trockenluft, Nutzung der Warmluft der Trocknung oder Vakuumdosierung erreicht, und zwar zusätzlich oder anstelle von Trocknungsprozessen. Beispielsweise wird hierbei im Einfülltrichter die schnelle Wiederaufnahme der Feuchtigkeit des weichgemachten Celluloseesters durch Beschaffung einer inerten Umgebung mittels Stickstoff verhindert. So kann sichergestellt werden, dass der weichgemachte Celluloseester vollständig trocken ohne Restfeuchtigkeit in den Extrusionsprozess gelangt.

Das für das erfindungsgemäße Verfahren verwendete Ausgangsmaterial besitzt in der Regel, wenn es frisch aus der Produktion kommt, einen Feuchtegehalt von etwa 2.000 ppm. Nach Sättigung beträgt der Feuchtegehalt etwa 4.000-10.000 ppm. Durch die erfindungsgemäß durchgeführte Vorbehandlung, namentlich Trocknung, des Ausgangsmateriales wird das Material auf einen maximalen Feuchtegehalt von 1.000 ppm (0,1 Gew%), gemessen bei ≥ 100 °C, gebracht. Dies entspricht Werten von ≤ 200 ppm, gemessen bei ≤ 60 °C, ≤ 500 ppm, gemessen bei ≤ 80 °C, und ≥ 1.500 ppm, gemessen brei ≥ 120 °C. Zur Messung der Feuchte werden Feuchtemessgeräte und Absorptionswaagen eingesetzt. Die angegebenen Werte basieren auf Messungen mit Absorptionswaagen, mit denen sich bei ≥ 100 °C exakte Werte erzielen lassen.

Was das verwendete Ausgangsmaterial anbetrifft, so wird bei einer ersten Ausführungsform des erfindungsgemäßen Verfahrens als Ausgangsmaterial ein organischen Celluloseester oder Cellulosemischester, insbesondere Celluloseacetat, und einen Weichmacher enthaltendes Material eingesetzt. Hierbei wird von äußerer Weichmachung gesprochen. Bei einer anderen Ausführungsform des Verfahrens wird als Ausgangsmaterial ein durch innere Weichmachung weichgemachter organischer Celluloseester oder Cellulosemischester, insbesondere Celluloseacetat, verwendet.

Als Weichmacher (äußere Weichmachung) werden vorzugsweise thermisch stabile und höher siedende Ester oder Ether eingesetzt, die einen Siedepunkt oberhalb von 200 °C aufweisen.

Geeignete Weichmacher zeichnen sich dadurch aus, dass sie eine ähnliche Polarität und ähnliche funktionelle Gruppen wie der organische Celluloseester oder Cellulosemischester, insbesondere Celluloseacetat, aufweisen sowie einen mittleren bis hohen Siedebereich besitzen. Die geeigneten Weichmacher sind weiterhin nichttoxisch und lebensmittelkonform. Sie weisen zudem ein geringes Bioakkumulationspotential auf und basieren teilweise oder vollständig auf nachwachsenden Rohstoffen. Bevorzugte Weichmachergruppen sind u.a. Benzoester, Citratester, Bernsteinsäureester, Adipinsäureester, Sebacinsäureester, Glykolderivate (z.B. Glykolester oder Glykolether), oder Triglyceride. Die Löslichkeitsparameter der geeigneten Weichmacher liegen im Bereich des Celluloseesters bzw. Cellulosemischesters, insbesondere von Celluloseacetat. Bevorzugt wird eine maximale Differenz zum Löslichkeitsparameter des Esters von ± 5 MPa^{0,5}. Die Siedetemperatur der geeigneten Weichmacher liegt oberhalb von 200 °C, bevorzugt oberhalb von 230 °C. Die geeigneten Weichmacher können flüssig oder feststoffartig, beispielsweise als Pulver, Flocken oder Granulat, vorliegen.

Insbesondere finden als Weichmacher Glycerin, Glycerintriacetat, Glyceroldiacetat, Di- und Triethylenglykole, Diethylenglykoldibenzoat, Dipropylenglykoldibenzoat, Ethylenglykoldiacetat, Triethylenglykoldiacetat, Triphenylphosphat, Polyethylenglykole, Propylenglykole, Milchsäureethylester, Milchsäuremethylester, Acetyltributylcitrat, Triethylcitrat, Diethylcitrat, Glycerinacetat, Phthalsäure-ester, Sorbitol und Sorbitolderivate, Maltit, Xylitol, Erythritol, Fettsäureester oder Mischungen der vorgenannten Stoffe Verwendung.

Die Verwendung eines geeigneten Weichmachers ist wichtig, um das Material überhaupt thermoplastisch verarbeitbar und aufschäumbar zu machen. Weichmacher und Celluloseester oder Cellulosemischester werden vorzugsweise zu einem Compound vermischt, das dann aufgeschmolzen wird. Als Weichmacher eignen sich grundsätzlich alle bekannten Weichmacher für organische Celluloseester bzw. Cellulosemischester.

Mit dem hier beschriebenen Zusatz eines Weichmachers wird eine sogenannte äußere Weichmachung erreicht, bei der die polaren Gruppen (Dipole) des Weichmachers mit den polaren Gruppen des Esters in Wechselwirkung treten. Dabei schieben sich die kleinen beweglichen Weichmacherdipole zwischen die Kettenmoleküle des Esters und binden sich an deren Dipole. Die Kettenmoleküle werden dadurch aufgelockert und beweglicher, gleichzeitig nehmen Weichheit und Dehnung des weichgemachten Materiales zu.

Der Weichmacher wird in einer solchen Menge zugesetzt, dass die nachfolgenden Verarbeitungsschritte des erfindungsgemäßen Verfahrens einwandfrei ausgeführt werden können, gleichzeitig jedoch die gewünschten mechanischen Eigenschaften (Steifigkeit) des Endproduktes nicht negativ beeinflusst werden.

Bei der zweiten Ausführungsform des erfindungsgemäßen Verfahrens finden als Ausgangsmaterial ein weichgemachter organischer Celluloseester oder Cellulosemischester, bevorzugt Celluloseacetatmaterial, Verwendung, welcher durch innere Weichmachung weichgemacht wurde. Bei der inneren Weichmachung werden durch Copolymerisation die Abstände der einzelnen Makromoleküle des Esters erweitert, wird die Zahl der Nebenvalenzbindungen verringert und wird die Kettenbeweglichkeit erhöht. Die innere Weichmachung wird dabei speziell durch die Einbindung oligomerer Komponenten, durch die Einbindung polymerer Komponenten, durch chemischreaktive Einbindung eines bisher physikalisch gebunden Weichmachers in den Ester oder durch Kombinationen dieser Verfahren erzielt.

Bevorzugt wird die innere Weichmachung mit Hilfe einer Kettenverlängerung durch mono-, bi- oder multifunktionelle Chain Extender oder mit Hilfe von Seitenkettenverzweigungen durch Isocyanate (z.B. Phenylisocyanat) oder Diisocyanate (z.B. Methylendiphenyldiisocyanat), Acrylsäuren (z.B. Dimethacrylate) oder Anhydride (z.B. Maleinsäureanhydrid)in Verbindung mit beispielsweise geeigneten Carbonsäuren oder Epoxiden realisiert.

Grundsätzlich zeigen Biopolymere, wie Celluloseacetat, in der Regel eine erhöhte Sensitivität gegen Scherung und thermische Belastung mit einhergehenden Molekulargewichts- und Eigenschaftsverlusten während der Verarbeitung. Dies führt zu begrenzten rheologischen Verarbeitungseigenschaften. Eine "maßgeschneiderte" stabile Rheologie ist jedoch für die Schaumextrusion unerlässlich. Bei der chemischen Modifizierung durch Seitenkettenverzweigungen oder Kettenverlängerungen (Chain Extender) werden durch eine chemische Anbindung die verarbeitungs- und anwendungstechnischen Probleme von physikalisch weichgemachtem Celluloseester(beispielsweise Migration und Additivablagerung) bei der Schaumfolienherstellung gänzlich vermieden und wird eine dauerhaft stabile Materialperformance erzielt.

Die Kettenverlängerung kann durch mono-, bi- oder multifunktionelle Additive (Chain Extender) realisiert werden. Bifunktionale Chain Extender führen vornehmlich zum Aufbau linearer Polymer(seiten)ketten, da sie immer nur zwei, typisch ähnliche Endgruppen verknüpfen. Diese Chain Extender müssen in der Regel auch in hoher Menge zugegeben werden, um ausreichenden Molekulargewichtsaufbaü zu ermöglichen. Multifunktionale Chain Extender bewirken hingegen schon in kleineren Mengen eine deutliche Molekulargewichtserhöhung und verbesserte Rheologie der Celluloseesterschmelze, da sie zwei oder mehrere gleiche oder verschiedene Endgruppen verknüpfen können. Sie besitzen daher auch für sehr kleine Verarbeitungsfenster (bei Biopolymeren der Fall) eine hohe Wirkungseffektivität. Eine zu hohe Dosierung kann jedoch zu einer Vernetzung des Polymers führen, so dass es zur Gelanisierung kommt und das Polymer die thermoplastische Verarbeitungsfähigkeit verliert. Um dies zu verhindern, können statt niedermolekulare multifunktionale Chain Extender sog. polymere multifunktionale Chain Extender eingesetzt werden. Diese besitzen in ihrer Struktur sowohl Bereiche mit hoher als auch Bereiche mit niedriger Funktionalität, so dass eine breitere Polymermodifizierung in einem breiteren Prozessfenster möglich wird. Durch den schmelzeverarbeitungsbedingten Abbau der Biopolymere werden freie Radikale an den Polymerketten gebildet, die mit den funktionalen Gruppen der eingebrachten Chain Extender während der Verarbeitung reagieren können. Hierdurch werden weit verzweigte Kettenstrukturen in und zwischen die Polymerketten eingebracht. Für esterbasierte Polymere, wie CA, PLA oder PBS, scheinen insbesondere epoxidfunktionale aliphatische, acrylsäurebasierte oder aromatische carboxyl-, amino- oder hydroxylbasierte Chain Extender vielversprechend. Als Beispiele wären hier 1,1-Carbonylbiscaprolactam (1,1-CBC), 2,2-Bis(2-Oxazolin) oder 1,3-Phenylenbisoxazolin (1,3-PBO) zu nennen.

Das erfindungsgemäße Verfahren basiert auf dem Grundgedanken, durch einen Nachschäumprozess zusätzlich zum mit dem ersten Treibmittel durchgeführten Schäumprozess eine weitere Expansion und damit Dichtereduktion des hergestellten Schaummateriales zu erreichen. Auf diese Weise gelingt es, die gewünschte Lebensmittelverpackung, insbesondere die entsprechenden Trays, auf besonders materialsparende Weise herzustellen, da sich hiermit eine Dickenvergrößerung des expandierten Zwischenproduktes, des Flachmaterials, um 30-200 %, typischerweise 60-140 %, erzielen lässt.

Zur Initiierung eines derartigen Nachschäumprozesses wird erfindungsgemäß das nach dem ersten Schäumprozess erhaltene Schaummaterial über einen Zeitraum gelagert, der das zumindest teilweise Eindiffundieren eines zweiten Treibmittels in das Schaummaterial ermöglicht. Erfindungsgemäß wird so vorgegangen, dass das erste Treibmittel nach dem Expandieren bzw. Extrudieren nicht abrupt aus dem Material entweicht, was möglicherweise zu einem Kollabieren des Schaummateriales führen könnte, sondern aus diesem relativ langsam entweicht und das zumindest teilweise Eindiffundieren des zweiten Treibmittels in das Schaummaterial ermöglicht,. Hierbei findet ein Gasaustausch statt, der eine Strukturveränderung bzw. einen Festigkeits/Stabilitätsabbau des Schaummateriales verhindert. Als bevorzugtes zweites Treibmittel findet Luft Verwendung. Der hier verwendete Begriff "Treibmittel" oder "Schäummittel" soll nicht nur Treibmittel abdecken, die aus einer einzigen Substanz bestehen, sondern auch solche, die mehrere Treibmittel umfassen oder die ein Treibmittelgemisch darstellen.

Nach dem Lagern wird das Schaummaterial auf eine Temperatur unterhalb der Aufschmelztemperatur desselben erwärmt. Hierdurch soll der erwähnte Nachschäumprozess initiiert werden, der zu einem erneuten Expandieren und damit der gewünschten weiteren, zweiten Dichtereduktion des Materials führt. Das Erwärmen des Materials wird erfindungsgemäß so durchgeführt, dass kein erneutes Aufschmelzen mehr erfolgt. Vorzugsweise erfolgt die Erwärmung so nahe wie möglich an die Grenze des Aufschmelzens heran. Hierbei wird ein Temperaturbereich von 5-160 °C, bevorzugt.

Das nach dem Extrudieren, d.h. nach Durchführung des ersten Schäumprozesses, erhaltene Flachmaterial besitzt vorzugsweise eine Dicke von 1-8 mm. Wie erwähnt, wird durch den erfindungsgemäß initiierten Nachschäumprozess eine Dickenvergrößerung des Flachmateriales von 30-200 %, insbesondere 60-140 %, erreicht.

Nach dem Erwärmen des Schaummateriales erfolgt vorzugsweise unmittelbar danach der Tiefziehvorgang zum Formen der entsprechenden Formteile (Lebensmittelverpackungen, insbesondere Trays).

Für eine qualitativ hochwertige Schaummaterialextrusion des weichgemachten Celluloseesters eignen sich insbesondere Treibmittel oder Treibmittelgemische (erstes Treibmittel), die einen polaren Anteil beinhalten. Zu nennen sind beispielsweise inerte Gase mit polaren Anteilen (z.B. CO₂), Fluorkohlenwasserstoffe (z.B. Tetrafluorethan) oder Hydrofluorolefine (z.B. HFO1234ze).

Unpolare Treibmittel können beispielsweise in Verbindung mit einem polaren Co-Treibmittel verwendet werden, welches als Vektorflüssigkeit bzw. Träger für eine verbesserte Einlösung fungiert. Die Hauptfunktion des Co-Treibmittels besteht darin, die Einlösung des eigentlichen Haupttreibmittels in die weichgemachte Celluloseesterschmelze zu fördern bzw. dieses beim Aufschäumprozess zu unterstützen. Für ein effektives Einlösen des Haupttreibmittels muss das Co-Treibmittel als Träger/Vektor fungieren und die Viskosität der Celluloseesterschmelze definiert anpassen. Hierfür ist eine hohe Verträglichkeit zwischen der Celluloseesterschmelze und dem Co-Treibmittel erforderlich. Ein wichtiger Parameter für die hohe Verträglichkeit ist eine ähnliche Polarität von Celluloseester und Co-Treibmittel.

Geeignete Co-Treibmittel sind Aceton, Ethanol, Ethylethanoat (Ethylacetat), 2-Propanol, Methylmethanoat (Methylformiat), Propylenglykolmonomethylether (1-Methoxy-2-Propanol).

Für das erfindungsgemäße Verfahren ist es von Bedeutung, dass das erste Treibmittel nach dem Extrudieren des Schaummateriales zumindest teilweise über einen entsprechenden Zeitraum im Material (in den Zellhohlräumen und in den Zellwänden) verbleibt, damit in Kombination mit dem eindiffundierten zweiten Treibmittel der gewünschte Nachschäumprozess stattfinden kann. Erfindungsgemäß kommen daher vorzugsweise solche Treibmittel als erste Treibmittel zum Einsatz, die diese Eigenschaften garantieren. Hierzu zählen beispielsweise Tetrafluorpropen (HBA-1) oder weitere Kältemittelgase der 4. Generation der sogenannten "Klimaanlagengase" oder späterer weiterer Generationen, Propan, Butan, Pentan, Hexan, Ethanol, Propanol, Ether, Aceton, Stickstoff, oder Gemische hiervon. Kohlendioxid (CO₂) besitzt zwar aufgrund seiner großen Verfügbarkeit und seines niedrigen Preises viele Vorteile, ist jedoch allein nicht vorteilhaft verwendbar, da es nach dem Extrudieren des Materiales sehr rasch entweicht, so dass die Gefahr des Kollabierens des Schaummateriales, insbesondere bei geringer Wandstärke der Zellen, groß ist und eine Entweichung aus dem Schaummaterial stattfindet, bevor das zweite Treibmittel eindiffundiert, so dass ein Nachschäumprozess schwierig wird.

Als erstes Treibmittel wird ein solches verwendet, das nicht zu einer Zerstörung der Polymerketten führt. Da Wasser eine derartige Zerstörung bewirkt, wird ein wasserfreies 1. Treibmittel eingesetzt.

Was den als Ausgangsmaterial eingesetzten organischen Celluloseester oder Cellulosemischester anbetrifft, so gelten bevorzugt die folgenden Auswahlkriterien. Es wird ein teilsubstituiertes Celluloseacetat mit einem Substitutionsgrad von 2-2,7 favorisiert, bevorzugt 2,5. Der gebundene Essigsäuregehalt liegt zwischen 52 und 58 %, bevorzugt zwischen 55 und 57 %. Der Polymerisationsgrad des Celluloseacetats liegt zwischen 100 und 300, bevorzugt zwischen 200 und 300. Die Polydispersität bewegt sich für Celluloseacetat zwischen 1 und 5. Für die Schaummaterialextrusion wird eine Polydispersität zwischen 2 und 5 bevorzugt. Die freie Restessigsäure des Celluloseacetats sollte kleiner 0,1 % sein, bevorzugt unter 0,05 %. Das Celluloseacetat kann sowohl als Pulver, Flocken oder Granulat vorliegen, wobei Granulat oder Pulver mit einer mittleren Korngröße zwischen 170 und 350 µm bevorzugt wird. Korngrößen oberhalb von 350 µm sind auch nutzbar, allerdings verschlechtert sich bei zu hoher oder zu inhomogener Korngröße die Weichmacherbenetzung und Weichmachervermischung, so dass längere Verfahrensstrecken, höhere Schereinwirkungen und zusätzliche Mischelemente für die Thermoplastifizierung erforderlich werden.

Das erfindungsgemäße Verfahren kann mit einem einzigen Extruder oder mit mehreren Extrudern durchgeführt werden. Vorzugsweise finden das Aufschmelzen und Thermoplastifizieren des Ausgangsmateriales sowie das Einführen des Treibmittels (ersten Treibmittels) in einem ersten Extruder und das Kühlen und Extrudieren in einem zweiten Extruder und/oder anderem Kühlaggregat statt. Beim Verlassen des zweiten Extruders bewirkt das Treibmittel (erste Treibmittel) durch die entstehende Druckentlastung ein Aufschäumen des Materiales, wobei, wie erwähnt, ein sofortiges abruptes Entweichen des Treibmittels auf erfindungsgemäße Weise verhindert wird, um den gewünschten Nachschäumprozess initiieren zu können.

Bei dem erfindungsgemäßen Verfahren findet als Ausgangsmaterial vorzugsweise ein solches Verwendung, das zusätzlich zum Cellulosester bzw. Cellulosemischester ein oder mehrere Additive, insbesondere ein Schaumnukleierungsmittel, enthält. Als Schaumnukleierungsmittel können aktive oder passive Mittel Verwendung finden, wobei als passives Schaumnukleierungsmittel ein aus Talkum bestehendes oder Talkum enthaltendes Mittel bevorzugt eingesetzt wird. Als aktives Schaumnukleierungsmittel wird insbesondere ein chemisches Treibmittel, das auf exothermer Zersetzungsreaktion beruht, verwendet. Endotherme chemische Treibmittel, wie Zitronensäure, sind ebenfalls einsetzbar, werden jedoch aufgrund der Wasserfreisetzung während der Zersetzung nicht favorisiert, da dies zu einem Abbau der Polymerketten (Hydrolyse) in Abhängigkeit der Verweilzeit führen kann.

Weitere Additive, die zugesetzt werden können, sind beispielsweise geeignete Gleitmittel. Derartige Mittel sind dem Fachmann bekannt.

Die Art/Menge des Treibmittels/Menge des Schaumnukleierungsmittels wird vorzugsweise so ausgewählt, dass die Schaumbildung möglichst nahe am Extrusionswerkzeugaustritt erfolgt.

Was die bei dem erfindungsgemäßen Verfahren Anwendung findenden Temperaturen anbetrifft, so wird vorzugsweise während der Aufschmelzphase in einem Extruder mit einer Zylinderwandtemperatur von 170-220 °C gefahren. Die Temperatur des Austrittswerkzeuges beim Extrudieren wird vorzugsweise auf 100-200 °C, bevorzugt zwischen 170 und 190°C, gehalten. Bei einer bevorzugten Ausführungsform wird das Schaummaterial nach dem Austritt aus dem Extrusionswerkzeug zusätzlich einer Kühlung unterzogen (mit Luft).

Bei den für das erfindungsgemäße Verfahren eingesetzten Vorrichtungen ist darauf zu achten, dass diese möglichst wenig Totzonen besitzen, da sich diese auf das erfindungsgemäße Verfahren negativ auswirken. Die Verweilzeit des Materials in den Vorrichtungen sollte möglichst gering sein.

Die mit dem erfindungsgemäßen Verfahren hergestellte Lebensmittelverpackung, insbesondere Trays für den Gebrauch als Einweggeschirr, besitzt gute mechanische Eigenschaften (Härte, Steifigkeit) sowie eine gute Wärmeformbeständigkeit (für einen Kontakt mit heißen Speisen). Das Material der Verpackung ist gut biologisch abbaubar, so dass die gewünschten Umweltschutzkriterien erfüllt werden. Aufgrund der durch den Nachschäumprozess erreichten geringen Dichte des Materials ist eine solche Verpackung besonders wirtschaftlich herstellbar.

Die Erfindung wird nachfolgend anhand eines Ausführungsbeispieles in Verbindung mit der Zeichnung im Einzelnen erläutert. Es zeigen:
- Figur 1: eine Schemadarstellung einer Anlage mit zwei Extrudern, die zur Durchführung des Verfahrens zur Herstellung von Lebensmittelverpackungen dient; und
- Figur 2: eine schematische Darstellung einer Gesamtanlage für die Durchführung des Verfahrens zur Herstellung von Lebensmittelverpackungen.

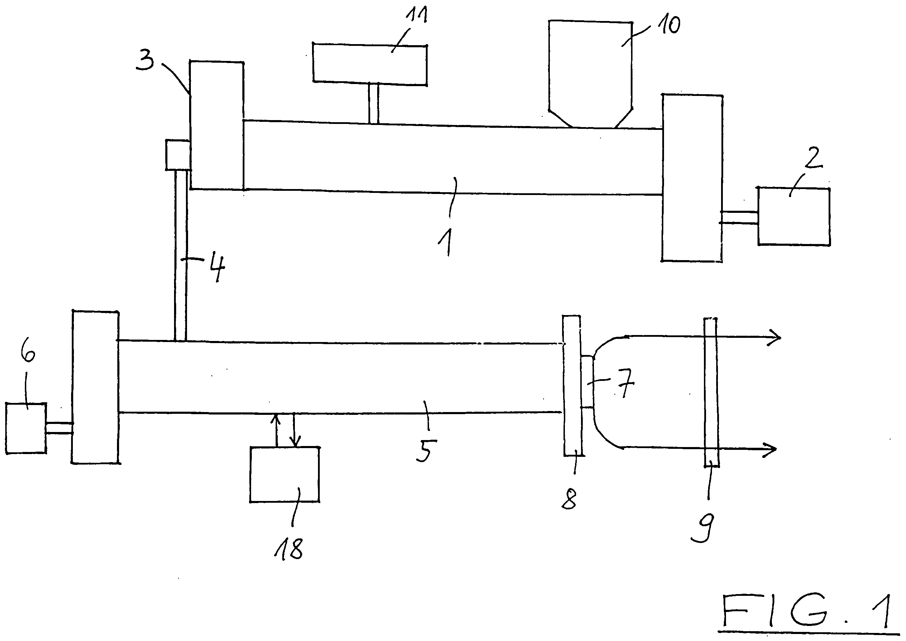

Die in Figur 1 schematisch dargestellte Anlage besitzt einen ersten Extruder 1 mit einem entsprechenden Antrieb 2 und einen zweiten Extruder 5 mit einem entsprechenden Antrieb 6. Über einen Eingabetrichter 10 wird Celluloseacetatmaterial im Gemisch mit einem Schaumnukleierungsmittel und einem Weichmacher in den Extruder 1 eingeführt. Durch Rotation der Extruderschnecke wird das eingeführte Materialgemisch verdichtet und dabei erwärmt, wobei es aufgeschmolzen wird. Über eine geeignete Beschickungseinrichtung 11 wird ein erstes Treibmittel, beispielsweise ein Gemisch aus Kohlendioxid und Tetrafluorpropen, in die Schmelze eingeführt. Die aufgeschmolzene Masse gelangt durch einen geeigneten Filter 3 und eine Überführungsleitung 4 in den zweiten Extruder 5. Das Material wird im Extruder 5 weitergefördert und dabei gekühlt. Es wird über ein geeignetes Austrittswerkzeug 7 in Form einer Düse unter Kühlung durch einen Luftring 8 vom Extruder abgegeben. Die Düse gibt die Masse in Form eines Schlauches als Flachmaterial ab, wobei die Masse nach dem Austritt aus der Düse infolge der entstehenden Druckentlastung aufgeschäumt wird. Über einen weiteren Luftring 9 erfolgt eine Kühlung des erhaltenen flachen Schaummateriales.

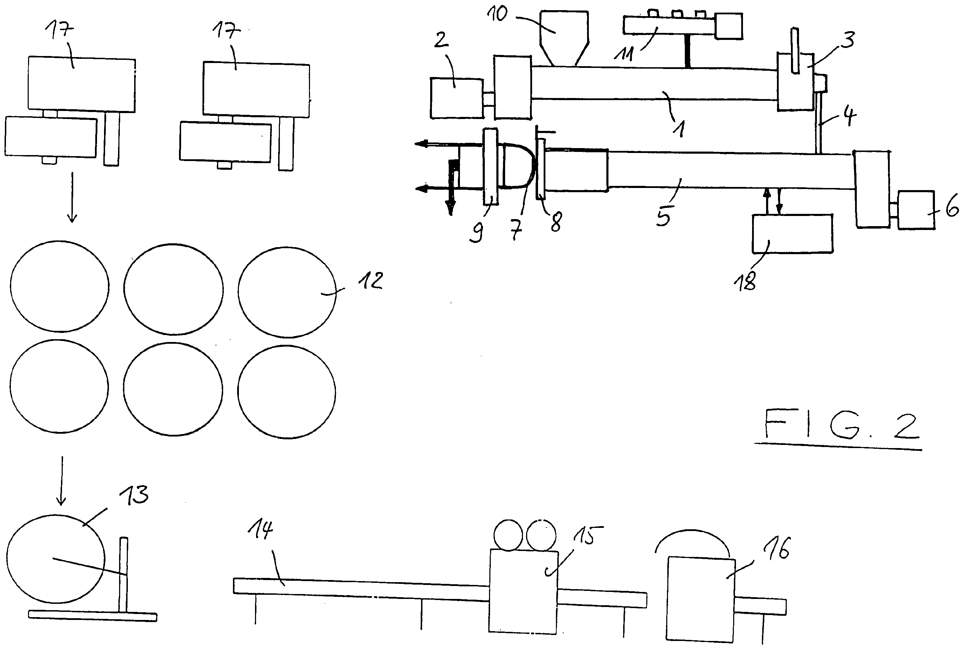

Eine der vorstehend beschriebenen Anlage im Wesentlichen entsprechende Anlage ist in Figur 2 rechts oben dargestellt. Das gekühlte Flachmaterial wird zu einer Wicklungsstation 17 geführt und dort zu Rollen aufgewickelt. Die erhaltenen Materialrollen 12 werden in einem Rollenlager gelagert, und zwar über eine ausreichende Zeitdauer, um das Eindiffundieren eines zweiten Treibmittels in das Schaummaterial zu ermöglichen. Nach der gewünschten Lagerzeit werden die Schaummaterialrollen 12 in eine Abwickeleinheit 13 geführt und dort zu einer Materialbahn abgewickelt. Die entsprechende Materialbahn wird dann einer Formstation zugeführt, die sich aus einem Heizabschnitt 14 und einem Tiefziehabschnitt 15 zusammensetzt. Durch das Erwärmen der Materialbahn im Heizabschnitt 14 erfolgt ein Nachschäumvorgang, der zu einer Dickenerhöhung der Materialbahn und damit zu einer Dichtereduzierung des Materials führt. Das erhaltene zusätzlich aufgeschäumte Material wird danach mit einer geeigneten Tiefziehvorrichtung im Tiefziehabschnitt 15 zu den gewünschten Formteilen tiefgezogen. Die erhaltenen Formteile werden danach mittels einer Stanzvorrichtung 16 zu den Lebensmittelverpackungen ausgestanzt.

Während der Kühlphase im zweiten Extruder 5 wird die aufgeschmolzene Masse mit Hilfe von Kühlwasser gekühlt, das über einen Kühlwasserbehälter 18 zu- und abgeführt wird. Eine entsprechende Kühlung der Masse ist von Bedeutung, um beim nach Verlassen des Extruders erfolgenden Aufschäumvorgang moderate Verhältnisse zu erzielen und ein zu abruptes Entweichen des ersten Treibmittels zu verhindern.

Das Eindiffundieren des zweiten Treibmittels erfolgt im Austausch mit dem ersten Treibmittel während der Zwischenlagerung des den zweiten Extruder verlassenden Schaummateriales. Wie erwähnt, kann das Material beispielsweise in der Form von Rollen 12 zwischengelagert werden. Es muss dafür Sorge getragen werden, dass das zweite Treibmittel, vorzugsweise Luft, in ausreichender Weise in das Material eindiffundieren kann, um den gewünschten Nachschäumprozess beim erneuten Erwärmen des Materials in der Formstation zu ermöglichen.

Was die Zwischenlagerzeit des Materiales anbetrifft, so sollte diese vorzugsweise zwischen einem Tag und drei Monaten betragen, wobei eine Zeitdauer von 3-15 Tagen bevorzugt wird.

Gemäß der nachfolgenden Tabelle wurden auf erfindungsgemäße Weise stabile Celluloseacetat-Schaumfolien hergestellt, wobei verschiedene Treibmittel und verschiedene Temperaturen zur Anwendung gelangten. Ausgangsmaterial war in allen Fällen ein durch äußere Weichmachung weichgemachter organischer Celluloseester, konkret ein Celluloseacetatmaterial. Bei sämtlichen Beispielen besaß das Ausgangsmaterial einen maximalen Feuchtegehalt von 1.000 ppm, gemessen bei ≥ 100 °C mittels Absorptionswaage.

Im Einzelnen wurde hierbei eingesetzt ein teilsubstituiertes Celluloseacetat (CA) mit einem Substitutionsgrad von 2,5 und einem gebundenen Essigsäuregehalt von 54,5-56 %. Der freie Restessigsäuregehalt betrug 0,03 %. Die Dichte des Celluloseacetats lag bei 1,35 g/cm³. Die Polydispersität lag im Bereich von 3,5-4,5. Das Celluloseacetat war pulverförmig mit einer mittleren Korngröße von 270 µm. Für die Thermoplastifizierung (Weichmachung) des Celluloseacetats wurden einerseits ein Glyceroltriacetat (GTA) mit einem Bioanteil von 33 % sowie ein Triethylcitrat (TEC) mit einem Bioanteil von 100 % verwendet. Sowohl das GTA als auch das TEC zeichnen sich durch ein niedriges Bioakkumulationspotential (schnelle Bioabbaubarkeit) sowie durch eine gute Lebensmittelkonformität aus. Die Siedetemperatur von GTA lag bei rund 260 °C, und die Dichte betrug 1,16 g/cm³. Das molare Volumen von GTA betrug 188,1 cm³/mol, und der Löslichkeitsparameter lag bei ca. 19,5 MPa^{0,5}. Die Siedetemperatur von TEC lag bei rund 290 °C, und die Dichte betrug 1,13 g/cm³. Das molare Volumen von TEC betrug 244,5 cm³/mol, und der Löslichkeitsparameter lag bei ca. 21 MPa^{0,5}.

Die Herstellung eines weichgemachten thermoplastischen CA-Compounds (Celluloseacetat-Compounds) erfolgte in allen Ausführungsbeispielen mithilfe eines gleichläufig dicht kämmenden Doppelschneckenextruders. Der Einzugsbereich und die Schnecke waren auf die Verarbeitung von pulverförmigen Stoffen optimiert. Das CA wurde gravimetrisch mithilfe von speziellen Pulverdosiereinheiten zugeführt. Der Weichmacher wurde separat mittels Flüssigdosierung in den Extrusionsprozess zudosiert. Das erhaltene thermoplastische Granulat wurde vor der Schaumextrusion zunächst mithilfe der entwickelten und vorstehend erläuterten Trocknungskonzepte auf einen Feuchtigkeitswert kleiner 1.000 ppm (0,1 %) getrocknet. Als Nukleierungsmittel wurde ein Talkummasterbatch mit 30 Gew.-% Talkum auf Basis des weichgemachten Celluloseacetats mittels Doppelschneckenextrusion hergestellt. Das Talkum besitzt eine spezifische Oberfläche von 9,5 m²/g und einen mittleren Partikeldurchmesser d50 von 2 µm. Auch das hergestellte Talkummasterbatch wurde mithilfe der entwickelten und vorstehend erläuterten Trocknungskonzepte auf einen Feuchtigkeitswert kleiner 1.000 ppm (0,1 %) getrocknet. Für ein verbessertes Einzugsverhalten des Granulates wurde während der Schaumfolienextrusion tw. ein Gleitmittel zugegeben. Dies war jedoch nicht zwingend erforderlich. Es fand ein Gleitmittel auf Stearatbasis Verwendung.

Die nachfolgende Tabelle beinhaltet konkrete Ausführungsbeispiele für die Herstellung einer Schaumfolie aus weichgemachtem thermoplastisch verarbeitungsfähigen CA. Es sind verschiedene Prozesspunkte in Abhängigkeit von der Trocknungstemperatur und des Treibmittels (der Treibmittelkombination) aufgelistet. Eine stabile Schaumfolienextrusion wurde insbesondere durch den Einsatz geeigneter Treibmittelgemische (Treibmittelkombinationen aus Haupttreibmittel und Co-Treibmittel) erreicht. Die hergestellten Schaumfolien zeichneten sich durch eine hohe Flexibilität, gute Thermoformbarkeit, niedrige Schaumdichten und feinzellige homogene Schaummorphologien mit überwiegend geschlossenen Zellen aus.

Aus den hergestellten Celluloseacetat-Schaumfolien wurden tiefgezogene Produkte gefertigt, die vergleichbare Eigenschaften wie Polystyrol besaßen.

Im Vergleich dazu konnten mit Materialien mit einem Feuchtegehalt > 1.000 ppm keine Schaumfolien hergestellt werden. Diese Materialien wiesen ein instabiles Schäumverhalten auf, und es wurde ein instabiles Schaummaterial erzeugt.

| **Versuchsnummer** | | **1** | **2** | **3** | **4** | **5** | **6** | **7** | **8** | **9** |
|---|---|---|---|---|---|---|---|---|---|---|
| | | | | | | | | | | |
| **Treibmittel** | | Butan | CO₂ | CO₂ | HFO | HFO | HFO | HFO | HFO | HFO |
| **Massestrom** | [g/h] | 240 | 150 | 240 | 600 | 480 | 310 | 310 | 310 | 310 |
| **Einspritzdruck** | [bar] | 120 | 140 | 124 | 120 | 100 | 80 | 80 | 80 | 80 |
| **Anteil** | [Gew.-%] | 1,100 | 0,639 | 1,036 | 2,927 | 2,182 | 2,38 | 1,82 | 1,77 | 1,77 |
| **Co-Treibmittel** | [ml/min] | - | - | - | - | - | Ethanol | Ethanol | Ethanol | Methoxy-Propanol |
| **Anteil** | [Gew.-%] | - | - | - | - | - | 2,00 | 2,50 | 2,60 | 2,50 |
| | | | | | | | | | | |
| **Temperaturen** | | | | | | | | | | |
| **Extruder** | | | | | | | | | | |
| **Einzugszone** | [°C] | aus | 90 | 90 | 90 | 90 | 90 | 90 | 90 | 90 |
| **Zone 1** | [°C] | 168 | 150 | 150 | 150 | 150 | 210 | 210 | 210 | 210 |
| **Zone 2** | [°C] | 240 | 190 | 190 | 190 | 190 | 210 | 210 | 210 | 210 |
| **Zone 3** | [°C] | 240 | 195 | 195 | 200 | 200 | 210 | 210 | 210 | 210 |
| **Zone 4** | [°C] | 230 | 195 | 195 | 200 | 200 | 210 | 210 | 210 | 210 |
| **Zone 5** | [°C] | 230 | 195 | 195 | 195 | 195 | 210 | 210 | 210 | 210 |
| **Zone 6** | [°C] | 210 | 195 | 195 | 195 | 195 | 210 | 210 | 210 | 210 |
| **Flansch Extruder** | [°C] | 210 | 195 | 195 | 195 | 195 | 200 | 200 | 200 | 200 |
| **Kuhlverlängerung (T1)** | [°C] | 210 | 195 | 195 | 195 | 195 | 200 | 197 | 197 | 197 |
| | | | | | | | | | | |
| **Werkzeug** | | | | | | | | | | |
| **FI Mischer 1** | [°C] | 210 | 185 | 185 | 187 | 190 | 200 | 200 | 200 | 200 |
| **Mischer1** | [°C] | 210 | 195 | 195 | 184 | 195 | 200 | 200 | 200 | 200 |
| **Werkzeug** | [°C] | 215 | 195 | 195 | 184 | 195 | 200 | 198 | 198 | 198 |
| | | | | | | | | | | |
| **Temperiereinheiten** | | | | | | | | | | |
| **WkzAussenlippe (T3)** | [°C] | 205 | 190 | 190 | 190 | 190 | 190 | 200 | 200 | 200 |
| **Wkz Gehäuse (T4)** | [°C] | 195 | 200 | 200 | 200 | 200 | 200 | 200 | 200 | 200 |
| **Wkz Dorn (T6)** | [°C] | 195 | 185 | 182 | 178 | 182 | 192 | 200 | 200 | 200 |
| **Material** | | | | | | | | | | |
| **Schmelzetemperaturam Wkz** | [°C] | 195 | 187 | 185 | 177 | 185 | 198,2 | 198 | 198,3 | 198,3 |
| **Trocknungstemperatur** | [°C] | 60 | 60 | 60 | 60 | 60 | 60 | 75 | 65 | 65 |
| | | | | | | | | | | |
| **Drücke** | | | | | | | | | | |
| **Extruder** | | | | | | | | | | |
| **Zone 3** | [bar] | 198 | 107 | 92 | 84 | 78 | 125 | 125,9 | 134 | 134 |
| **Zone 6** | [bar] | 190 | 100 | 89 | 82 | 78 | 75 | 82,6 | 85 | 85 |
| **Mischer** | [bar] | 100 | 97 | 83 | 63 | 58 | 60 | 72,7 | 75 | 75 |
| **Werkzeug** | [bar] | 177 | 150 | 150 | 120 | 120 | 48 | 63.5 | 60 | 60 |
| | | | | | | | | | | |
| **Antriebe** | | | | | | | | | | |
| **Drehzahl Extruder** | 1/min | 86 | 7.6 (8) | 7,6 (8) | 5,8 (6) | 7,6 (8) | 7,3 | 7,2 | 7,4 | 7,4 |
| **Drehzahl Extruder (einge-stellt)** | 1/min | 7,3 | 7,1 | 7,1 | 5,5 | 7,2 | 7 | 7 | 7 | 7 |
| | | | | | | | | | | |
| **Normvolumenstrom (Birne)** | [Nm³/h] | 6,8 | 1174 | 772 | 688 | 746 | aus | 0 | aus | aus |
| | | | | | | | | | | |
| **Massedurchsatz** | [kg/h] | 11 | 23,48 | 23,16 | 20,5 | 22 | 13 | 17 | 17,5 | 17,5 |
| **Dichte** | [kg/m³] | 230,00 | 230,00 | 130,00 | 180,00 | 200,00 | 220,00 | 175,00 | 160,00 | 150,00 |

## Patentansprüche

1. Verfahren zur Herstellung von Lebensmittelverpackungen aus biologisch abbaubarem Schaummaterial, insbesondere von Trays für den Gebrauch als Einweggeschirr, mit den folgenden Schritten:
Bereitstellen eines aus organischem Celluloseester oder Cellulosemischester, insbesondere Celluloseacetat, bestehenden oder diesen enthaltenden Ausgangsmateriales;
Vorbehandeln des Ausgangsmateriales durch Trocknung zur Feuchtereduzierung bis auf einen maximalen Feuchtegehalt von 1.000 ppm, gemessen bei ≥ 100 °C mit einer Absorptionswaage;
Halten des Feuchtegehaltes auf/unter dieser Grenze bis zum Beginn des nachfolgenden Aufschmelzprozesses;
Aufschmelzen des vorbehandelten Ausgangsmateriales, Einführen eines Treibmittels in die Schmelze, Kühlen der resultierenden Masse und Extrudieren derselben zum Aufschäumen zum Erhalt eines Schaummateriales als Flachmaterial;
wobei ein wasserfreies Treibmittel verwendet wird, das erhaltene Schaummaterial über einen zum zumindest teilweisen Eindiffundieren eines zweiten Treibmittels in das Schaummaterial ausreichenden Zeitraum gelagert wird, das gelagerte Schaummaterial auf eine Temperatur unterhalb der Aufschmelztemperatur desselben zum erneuten Expandieren durch Nachschäumen erwärmt wird und das erwärmte Schaummaterial zum Formen der Lebensmittelverpackung tiefgezogen wird.

2. Verfahren nach Anspruch 1, **dadurch gekennzeichnet, dass** zur Trocknung eine Kaskadentrocknung durchgeführt wird.

3. Verfahren nach Anspruch 1 oder 2, **dadurch gekennzeichnet, dass** zur Trocknung kontinuierlich arbeitende Infrarot-Trockner, insbesondere Infrarot-Drehrohrtrockner, eingesetzt werden.

4. Verfahren nach einem der Ansprüche 1 bis 3, **dadurch gekennzeichnet, dass** zur Trocknung ein kontinuierlich arbeitender Infrarot-Trockner mit nachfolgendem Warmlufttrockner verwendet wird.

5. Verfahren nach einem der vorangehenden Ansprüche, **dadurch gekennzeichnet, dass** das Ausgangsmaterial nach der Vorbehandlung zur Feuchtereduzierung bis zum Beginn des Aufschmelzprozesses und/oder die entsprechenden Einrichtungen aktiv von Feuchtigkeit freigehalten werden, insbesondere durch Stickstoffspülung, Trockenluft, Nutzung der Warmluft der Trocknung oder Vakuumdosierung.

6. Verfahren nach einem der vorangehenden Ansprüche, **dadurch gekennzeichnet, dass** als Ausgangsmaterial ein organischen Celluloseester oder Cellulosemischester und einen Weichmacher enthaltendes Material eingesetzt wird.

7. Verfahren nach Anspruch 6, **dadurch gekennzeichnet, dass** als Weichmacher thermisch stabile und höher siedende Ester oder Ether eingesetzt werden, die einen Siedepunkt oberhalb von 200 °C aufweisen.

8. Verfahren nach einem der Ansprüche 6 oder 7, **dadurch gekennzeichnet, dass** Glycerin, Triacetin, Triethylenglykol, Polyethylenglykol, Propylenglykol, Milchsäureethylester, Milchsäuremethylester, Glycerintriacetat, Acetyltributylcitrat, Triethylcitrat, Diethylcitrat, Glycerinacetat, Phthalsäureester, Sorbitol, Maltit, Xylitol, Erythritol, Fettsäureester oder Mischungen der vorgenannten Stoffe verwendet werden.

9. Verfahren nach einem der Ansprüche 1 bis 5, **dadurch gekennzeichnet, dass** als Ausgangsmaterial ein durch innere Weichmachung weichgemachter organischer Celluloseester oder Cellulosemischester verwendet wird.

10. Verfahren nach Anspruch 9, **dadurch gekennzeichnet, dass** die innere Weichmachung durch die Einbindung oligomerer Komponenten, durch die Einbindung polymerer Komponenten, durch chemisch-reaktive Einbindung eines bisher physikalisch gebundenen Weichmachers, insbesondere unter Einsatz eines geeigneten Isocyanats, eines geeigneten Anhydrids oder einer geeigneten Acrylsäure, in den organischen Celluloseester oder Cellulosemischester oder durch Kombinationen dieser Verfahren erzielt wird.

11. Verfahren nach Anspruch 10, **dadurch gekennzeichnet, dass** die innere Weichmachung mit Hilfe von mono-, bi- oder multifunktionalen Chain Extendern realisiert wird.

12. Verfahren nach einem der vorangehenden Ansprüche, **dadurch gekennzeichnet, dass** das Aufschmelzen und Einführen des Treibmittels in einem ersten Extruder und das Kühlen und Extrudieren in einem zweiten Extruder und/oder anderem Kühlaggregat ausgeführt werden.

13. Verfahren nach einem der vorangehenden Ansprüche, **dadurch gekennzeichnet, dass** als Ausgangsmaterial ein solches verwendet wird, das zusätzlich zum organischen Celluloseester oder Cellulosemischester ein oder mehrere Additive, insbesondere ein Schaumnukleierungsmittel, enthält.

14. Verfahren nach einem der vorangehenden Ansprüche, **dadurch gekennzeichnet, dass** als Treibmittel ein solches verwendet wird, das mindestens einen Bestandteil aufweist, der beim Übergang in den Gaszustand der Schmelze beim Aufschäumen Wärme entzieht.

## Claims

1. Process for the production of food packaging from biodegradable foam material, in particular of trays for use as single-use tableware, with the following steps:
provision of a starting material consisting of, or comprising, organic cellulose ester or mixed cellulose ester, in particular cellulose acetate;
pretreating of the starting material via drying to reduce moisture content to a maximal moisture content of 1000 ppm, measured at ≥ 100°C by using an absorption balance;
retention of the moisture content at/below this limit until the beginning of the subsequent melting process;
melting of the pretreated starting material, introduction of a blowing agent into the melt, cooling of the resultant composition and extrusion of the same for foaming to give a foam material as flat material;
where a water-free blowing agent is used, the resultant foam material is stored for a period sufficient for at least some diffusion of a second blowing agent into the foam material, the stored foam material is heated for further expansion via secondary foaming to a temperature below the melting point of the same, and the heated foam material is deep-drawn to mould the food packaging.

2. Process according to Claim 1, **characterized in that** the drying procedure uses cascade drying.

3. Process according to Claim 1 or 2, **characterized in that** the drying procedure uses continuously operating infrared dryers, in particular infrared rotary-tube dryers.

4. Process according to any of Claims 1 to 3, **characterized in that** the drying procedure uses a continuously operating infrared dryer with downstream warm-air dryer.

5. Process according to any of the preceding claims, **characterized in that** moisture is actively kept away, in particular via nitrogen-flushing, dry air, use of the warm air from the drying procedure, or metering in vacuo, from the starting material after the pretreatment to reduce moisture content until the beginning of the melting process, and/or from the corresponding equipment.

6. Process according to any of the preceding claims, **characterized in that** as starting material a material comprising an organic cellulose ester or mixed cellulose ester and a plasticizer is used.

7. Process according to Claim 6, **characterized in that** as plasticizer thermally stable and relatively high-boiling-point esters or ethers with a boiling point above 200°C are used.

8. Process according to Claim 6 or 7, **characterized in that** glycerol, triacetin, triethylene glycol, polyethylene glycol, propylene glycol, ethyl lactate, methyl lactate, glycerol triacetate, tributyl acetylcitrate, triethylcitrate, diethylcitrate, glycerol acetate, phthalic ester, sorbitol, maltitol, xylitol, erythritol, fatty acid ester or a mixture of the abovementioned substances is used.

9. Process according to any of Claims 1 to 5, **characterized in that** as starting material an organic cellulose ester or mixed cellulose ester plasticized via internal plasticization is used.

10. Process according to Claim 9, **characterized in that** the internal plasticization is achieved via incorporation of oligomeric components, via incorporation of polymeric components, via incorporation by chemical reaction of a previously physically bound plasticizer, in particular with use of a suitable isocyanate, of a suitable anhydride or of a suitable acrylic acid, into the organic cellulose ester or mixed cellulose ester or via a combination of these processes.

11. Process according to Claim 10, **characterized in that** the internal plasticization is achieved with the aid of mono-, bi- or polyfunctional chain extenders.

12. Process according to any of the preceding claims, **characterized in that** the melting procedure and introduction of the blowing agent are implemented in a first extruder and the cooling and extrusion procedures are implemented in a second extruder and/or other cooling assembly.

13. Process according to any of the preceding claims, **characterized in that** the starting material used comprises in addition to the organic cellulose ester or mixed cellulose ester one or more additives, in particular a foam nucleating agent.

14. Process according to any of the preceding claims, **characterized in that** the blowing agent comprises at least one constituent which extracts upon transition to the gas phase heat from the melt during the foaming procedure.

## Revendications

1. Procédé pour la fabrication d'emballages alimentaires à base de matériau alvéolaire biologiquement dégradable, en particulier de plateaux pour l'emploi comme vaisselle à usage unique, comportant les étapes suivantes :
disposition d'un matériau de départ consistant en ester de cellulose ou ester mixte de cellulose organique, en particulier acétate de cellulose ou contenant un tel ester ;
prétraitement du matériau de départ par séchage pour la réduction de la teneur en humidité jusqu'à une teneur maximale en humidité de 1 000 ppm, mesurée à ≥ 100 °C à l'aide d'une balance pour la mesure de l'absorption ;
maintien de la teneur en humidité à/au-dessous de cette limite jusqu'au début du processus de fusion subséquent ;
fusion du matériau de départ prétraité, introduction d'un agent porogène dans la masse fondue, refroidissement de la masse résultante et extrusion de celle-ci pour le moussage, pour l'obtention d'un matériau alvéolaire sous forme de matériau plat ;
dans lequel on utilise un agent porogène anhydre, on stocke le matériau alvéolaire obtenu pendant une durée suffisante pour la pénétration au moins partielle d'un deuxième agent porogène par diffusion dans le matériau alvéolaire, on chauffe le matériau alvéolaire stocké jusqu'à une température inférieure à la température de fusion de celui-ci, pour la nouvelle expansion par moussage secondaire et on emboutit le matériau alvéolaire chauffé, pour la mise en forme de l'emballage alimentaire.

2. Procédé selon la revendication 1, **caractérisé en ce que** pour le séchage on effectue un séchage en cascade.

3. Procédé selon la revendication 1 ou 2, **caractérisé en ce que** pour le séchage on utilise des sécheurs à infrarouge, en particulier des sécheurs à infrarouge tubulaires rotatifs, fonctionnant en continu.

4. Procédé selon l'une quelconque des revendications 1 à 3, **caractérisé en ce que** pour le séchage on utilise un sécheur à infrarouge fonctionnant en continu avec sécheur à air chaud y faisant suite.

5. Procédé selon l'une quelconque des revendications précédentes, **caractérisé en ce que** le matériau de départ après le prétraitement pour la réduction de la teneur en humidité jusqu'au début du processus de fusion et/ou les dispositifs correspondants sont maintenus activement exempts d'humidité, en particulier par balayage à l'azote, air sec, utilisation de l'air chaud du séchage ou application de vide.

6. Procédé selon l'une quelconque des revendications précédentes, **caractérisé en ce qu'**on utilise comme matériau de départ un matériau contenant des esters de cellulose ou esters mixtes de cellulose organiques et un plastifiant.

7. Procédé selon la revendication 6, **caractérisé en ce qu'**on utilise comme plastifiant des éthers ou esters thermiquement stables et à haut point d'ébullition, qui présentent un point d'ébullition supérieur à 200 °C.

8. Procédé selon l'une quelconque des revendications 6 et 7, **caractérisé en ce qu'**on utilise du glycérol, de la triacétine, du triéthylèneglycol, du polyéthylèneglycol, du propylèneglycol, du lactate d'éthyle, du lactate de méthyle, du triacétate de glycérol, du citrate d'acétyle et de tributyle, du citrate de triéthyle, du citrate de diéthyle, de l'acétate de glycérol, des esters d'acide phtalique, du sorbitol, du maltitol, du xylitol, de l'érythritol, des esters d'acides gras ou des mélanges des substances précitées.

9. Procédé selon l'une quelconque des revendications 1 à 5, **caractérisé en ce qu'**on utilise comme matériau de départ un ester de cellulose ou ester mixte de cellulose organique plastifié par plastification interne.

10. Procédé selon la revendication 9, **caractérisé en ce que** la plastification interne est réalisée par l'incorporation de composants oligomères, par l'incorporation de composants polymères, par incorporation chimiquement réactive d'un plastifiant lié physiquement, en particulier avec utilisation d'un isocyanate approprié, d'un anhydride approprié ou d'un acide acrylique approprié, dans les esters de cellulose ou esters mixtes de celluloses organiques ou par des combinaisons de ces procédés.

11. Procédé selon la revendication 10, **caractérisé en ce que** la plastification interne est réalisée à l'aide de prolongateurs de chaîne mono-, bi- ou multi-fonctionnels.

12. Procédé selon l'une quelconque des revendications précédentes, **caractérisé en ce qu'**on effectue la fusion et l'introduction de l'agent porogène dans une première extrudeuse et le refroidissement et l'extrusion dans une deuxième extrudeuse et/ou un autre appareil de refroidissement.

13. Procédé selon l'une quelconque des revendications précédentes, **caractérisé en ce qu'**on utilise comme matériau de départ un tel matériau qui en plus de l'ester de cellulose ou ester mixte de cellulose organique contient un ou plusieurs additifs, en particulier un agent de nucléation de mousse.

14. Procédé selon l'une quelconque des revendications précédentes, **caractérisé en ce qu'**on utilise comme agent porogène un tel agent qui comporte au moins un constituant qui extrait de la chaleur de la masse fondue lors du moussage lors du passage à l'état gazeux.
